# EUROPÄISCHE PATENTSCHRIFT

(11) **EP 1 240 065 B1**
(45) Veröffentlichungstag und Bekanntmachung des Hinweises auf die Patenterteilung: **17.03.2004**
(21) Anmeldenummer: 00987249.0
(22) Anmeldetag: 15.11.2000
(51) Int. Cl.: B62D 25/08, B62D 21/11

(54) **FAHRZEUGKAROSSERIE MIT EINER BODENSEITIGEN VERSTREBUNGSANORDNUNG**
VEHICLE BODY COMPRISING A BRACING ARRANGEMENT ON THE BOTTOM SIDE
CARROSSERIE AUTOMOBILE COMPORTANT UN DISPOSITIF D'ENTRETOISE COTE INFERIEUR

(30) Priorität: 10.12.1999 DE 19959607
(43) Veröffentlichungstag der Anmeldung: 18.09.2002
(73) Patentinhaber: Volkswagen Aktiengesellschaft, 38436 Wolfsburg (DE)
(72) Erfinder: PÖRNER, Frank, 38446 Wolfsburg (DE)
(86) Internationale Anmeldenummer: PCT/EP2000/011303
(87) Internationale Veröffentlichungsnummer: WO 2001/042075

(56) Entgegenhaltungen:
- EP-A- 0 941 912
- DE-A- 3 139 458
- DE-A- 4 227 668
- US-A- 5 417 454
- PATENT ABSTRACTS OF JAPAN vol. 015, no. 335 (P-1242), 26. August 1991 (1991-08-26) & JP 03 122788 A (OKI ELECTRIC IND CO LTD), 24. Mai 1991 (1991-05-24)

## Beschreibung

Die Erfindung betrifft eine Fahrzeugkarosserie mit einer bodenseitigen Verstrebungsanordnung.

Zur Verbesserung der Torsions- und Biegesteifigkeit von selbsttragenden Fahrzeugkarosserien sind aus dem Stand der Technik vielfältige Lösungen bekannt, bei denen im Bereich des Unterbodens der Fahrzeugkarosserie zusätzliche Verstrebungen angebracht werden. Dies wird insbesondere bei offenen Fahrzeugen praktiziert, um Torsionsschwingungen um die Fahrzeuglängsachse sowie Querbiegungen des Fahrzeugendes zu verringern, da bei diesen die Versteifungswirkung des Fahrzeugdaches fehlt. Versteifungsstreben werden jedoch auch bei geschlossenen Fahrzeugen eingesetzt, um Leichtbaukonstruktionen an besonders belasteten Stellen die notwendige Steifigkeit zu verleihen.

Aus der EP 0 603 536 B1 ist eine Fahrzeugkarosserie für einen Sportwagen bekannt, die im Bereich einer Fahrgastzelle äußere, seitliche Längsträger aufweist. Die Längsträger erstrecken sich bis in einen heckseitigen Motorraum und sind im Bereich der Hinterräder auf die Fahrzeuglängsmittelachse hin eingezogen und nach oben abgesetzt. An den seitlichen Längsträgem ist eine aus zwei Streben gebildete, V-förmige Versteifungsanordnung befestigt, deren Spitze in Richtung des Fahrzeughecks weist. Die Versteifungsanordnung setzt den Fahrzeugunterboden heckseitig im wesentlichen horizontal fort. Dabei ist die Spitze der Versteifungsanordnung über weitere Versteifungsstreben gegen die den Motorraum begrenzenden Längsträger abgestützt, wobei die weiteren Versteifungsstreben bei Betrachtung in einer Vertikalebene quer zur Fahrzeuglängsrichtung ebenfalls V-förmig angeordnet sind, so daß sich eine räumliche Doppel-V-Anordnung ergibt, deren Spitzen in einem Punkt in einer Fahrzeuglängsmittelebene zusammenlaufen.

Eine weitere selbsttragende Fahrzeugkarosserie mit Versteifungsstreben im Bodenbereich ist aus der DE 39 05 650 C2 bekannt. Diese umfaßt wiederum äußere, seitliche Längsträger im Bodenbereich einer Fahrgastzelle sowie zur Fahrzeugmittelachse und nach oben hin abgesetzte weitere Längsträger, die sich in einen frontseitigen Motorraum erstrecken. Die Versteifungsstreben überbrücken hierbei den Übergang zwischen den Längsträgem im Bereich der Vorderradausnehmungen und sind zur Fahrzeuglängsmittelachse mit einem Winkel von etwa 45 Grad angestellt, ohne untereinander verbunden zu sein. Jede der Streben ist mit einem Ende an einem der äußeren, seitliche Längsträger befestigt. Das andere Ende ist an einem Querträger befestigt, der an den Längsträgem im Bereich des Motorraums angebracht ist und sich in etwa im Bereich der Radausnehmungen unterhalb eines Motors erstreckt. Hierdurch wird vor allem eine Erhöhung der Steifigkeit im Übergangsbereich der Längsträger auf der Höhe der Radausnehmungen erzielt.

Weitere Strebenanordnungen zur Versteifung einer Fahrzeugkarosserie Im Bodenbereich sind beispielsweise aus der DE 31 39 458 A1 oder der DE 767 141 PS bekannt.

Des Weiteren ist aus der gattungsbildenden US-A-5,417,454 eine Fahrzeugkarosserie mit bodenseitigen diagonal angeordneten Verstrebungen bekannt, die sich von einem stirnseitig der Längsträger eines Hauptrahmens befestigten Querträger zu einem weiteren davorliegenden Querträger erstrecken. Mit dieser Maßnahme soll eine Verringerung von Schwingungen im Fahrzeugboden erzielt werden.

Weiterhin ist der EP 0 941 912 A1 ein Kraftfahrzeug mit einem flächigen Versteifungselement zu entnehmen, welches den zwischen den Längsträgem liegenden Bauraum überspannt, sich bis zu einem vorderen Querträger am vorderen Ende des Kraftfahrzeugs erstreckt und im Wesentlichen an den Längsträgern sowie am vorderen Querträger befestigt ist.

Der Erfindung liegt die Aufgabe zugrunde, die Torsions- und Biegesteifigkeit einer Fahrzeugkarosserie weiter zu verbessern.

Diese Aufgabe wird gelöst durch eine Fahrzeugkarosserie mit einer bodenseitigen Verstrebungsanordnung, umfassend einen Hauptrahmen mit zwei zu einem Ende des Fahrzeugs verlaufenden Längsträgern, die gegenüber einem Fahrzeugunterboden nach oben abgesetzt sind, einen an dem Hauptrahmen befestigten, den Unterboden des Hauptrahmens in Richtung des Endes des Fahrzeuges fortsetzenden Hilfsrahmen, einen im Fahrzeugendbereich an den Längsträgern befestigten Querträger, der einen zur Bodenseite nach unten auskragenden, sich im wesentlichen horizontal in Fahrzeugquerrichtung erstreckenden und im wesentlichen auf der Höhe des Hiffsrahmens angeordneten Verbindungsabschnitt aufweist, welcher an seinen axialen Enden jeweils in einem im wesentlichen vertikal oder nach oben geneigt verlaufenden Abschnitt übergeht und zu einem Endabschnitt eines der Längsträger leitet, sowie eine den Hilfsrahmen in Richtung des Fahrzeugendes im wesentlichen horizontal fortsetzende Verstrebungsanordnung, die mit einem Ende an in Fahrzeugquerrichtung voneinander beabstandeten Punkten an dem Hilfsrahmen befestigt ist und mit dem anderen Ende an dem Verbindungsabschnitt des Querträgers befestigt ist.

Hierdurch kann die Anlenkung der Verstrebungsanordnung an ein Bauteil hoher struktureller Steifigkeit vergleichsweise weit in Richtung des Frontendes bzw. Heckendes des Fahrzeuges vorgeschoben werden, so daß sich eine weitere Verbesserung der statischen wie auch der dynamischen Steifigkeit in einem für das Schwingungsverhalten des gesamten Fahrzeuges wichtigen, bodennahen Bereich des Vorder- bzw. Hinterwagens ergibt.

Ferner ist eine besonders raumökonomische Bauweise des Querträgers erzielt, die beispielsweise im Bereich des Motorraumes anzuordnende Aggregate bzw. Hilfsaggregate nicht behindert.

Gerade bei der Anbringung größerer Massen an einem Ende des Fahrzeuges ergibt sich eine deutliche Reduzierung von Torsionsschwingungen und damit eine Stabilisierung der Karosserie in Fahrzeugquerrichtung. Durch die Aussteifung des Fahrzeugfrontendes bzw. des Fahrzeughecks wird auch ein Hin-und-Herschwingen der Längsträger in Querrichtung in einer Horizontalebene des Fahrzeuges vermindert. Die erfindungsgemäße Lösung eignet sich besonders zur einfachen, nachträglichen Versteifung von in der Grundversion geschlossenen, in Serienfertigung hergestellten Fahrzeugen, deren Karosserie als Basis für eine offene Version ohne Dachaufbau verwendet wird.

Durch eine einstückige Ausbildung des Querträgers kann in einer bevorzugten Ausführungsform der Montageaufwand der gesamten zusätzlichen Versteifung, bestehend aus dem Querträger und der Verstrebungsanordnung, verringert werden.

In einer vorteilhaften Ausgestaltung der Erfindung wird die Verstrebungsanordnung durch zwei Streben gebildet, die zu dem Fahrzeugende hin V-förmig aufeinanderzulaufen. Hierdurch läßt sich mit einfachen Mitteln ein zusätzlicher Versteifungseffekt erzielen. Insbesondere ist es auch möglich, eine solche Anordnung nachträglich leicht an einem fertigen Fahrzeug anzubringen

Vorzugsweise sind die Streben in einem gemeinsamen Punkt an dem Querträger angelenkt, so daß diese in einem einzigen Arbeitsgang ohne großen Aufwand mit dem Querträger verbunden werden können.

Alternativ hierzu kann die Verstrebungsanordnung auch durch einen flachen Schubrahmen gebildet werden, der an dem Querträger entlang des sich in Fahrzeugquerrichtung erstreckenden Verbindungsabschnittes befestigt ist. Hierdurch läßt sich eine besonders hohe Versteifungswirkung bis zum Fahrzeugende erzielen. Der Schubrahmen kann gleichfalls dazu verwendet werden, einen Motorraum zur Bodenseite hin abzuschließen.

Aus Gründen der Gewichtsersparnis wird die Verstrebungsanordnung bevorzugt als im wesentlichen rechteckiger Rahmen mit Diagonalstreben ausgebildet.

Eine besondere einfache Herstellung der Verstrebungsanordnung ergibt sich in weiterer, vorteilhafter Ausgestaltung dann, wenn diese als einstückiges Blechelement mit vier kleeblattartig angeordneten Dreiecksausnehmungen ausgebildet ist, die beispielsweise einfach aus dem Blechelement ausgestanzt werden können.

In einer weiteren, vorteilhaften Ausgestaltung der Erfindung sind an dem Hilfsrahmen Radträger für die Räder einer Fahrzeugachse abgestützt, wobei der Hilfsrahmen unterhalb der Radachsen liegt, die Längsträger sich hingegen über die Radachsen erstrecken. Damit ergibt sich eine beispielsweise den Motorraum oder Gepäckraum eines Fahrzeuges umgebende, käfigartige Konstruktion hoher Steifigkeit. Der Hilfsrahmen erfüllt dabei die Doppelfunktion der Abstützung der Radträger der Räder einer Fahrzeugachse sowie der zusätzlichen Querversteifung der Fahrzeugkarosserie im Bereich der Radausnehmungen.

Vorzugsweise ist der Hilfsrahmen an einem Abschnitt eines Bodenbleches zwischen den Längsträgem befestigt. Damit kann der Hilfsrahmen an einem in Richtung auf das Ende des Fahrzeuges möglichst weit vorgeschobenen Abschnitt des Unterbodens des Hauptrahmens befestigt werden, während die Längsträger bereits nach oben wegknicken . Im Vergleich zu den eingangs erläuterten, bekannten Versteifungsanordnungen bleibt damit die zu überbrückende Länge der Verstrebungsanordnung und insbesondere der Versteifungsstreben zwischen den verschiedenen Abschnitten des Hauptrahmens kurz, so daß eine gute Aussteifung des Vorder- bzw. Hinterwagens erzielt wird. Überdies wird eine Beeinträchtigung der freien Bodenhöhe des Fahrzeuges vermieden.

In einer weiteren, vorteilhaften Ausgestaltung der Erfindung ist an den freien Enden der Längsträger ein Endrahmen befestigt, der sich im wesentlichen vertikal ausgerichtet in einer Ebene quer zur Fahrzeuglängsrichtung erstreckt. Im Falle eines Frontendrahmens dient dieser der Aufnahme der Beleuchtungseinrichtung sowie gegebenenfalls eines Kühlers des Fahrzeuges. Der Endrahmen kann als Baueinheit insgesamt an die vorderseitigen Enden der Längsträger angesetzt werden.

Vorzugsweise ist der Querträger als eigenständiges Bauteil in Fahrzeuglängsrichtung unmittelbar neben dem Endrahmen auf der zu dem Fahrzeug hin liegenden Seite angeordnet.

In einer alternativen Ausführungsvariante ist der Querträger jedoch auch an dem Endrahmen selbst befestigt. Dies erlaubt eine festigkeitsoptimierte Aussteifung des Endrahmens. Weiterhin ist es möglich, den Querträger zusammen mit dem Endrahmen vorzumontieren und dann diese Einheit an den freien Endabschnitten der Längsträger zu befestigen.

Vorzugsweise wird der Querträger in den Frontendrahmen integriert und einstückig mit diesem ausgebildet, so daß der zuvor beschriebene Vormontageschritt entfallen kann.

Die Erfindung wird nachfolgend anhand von vier in der Zeichnung dargestellten Ausführungsbeispielen näher erläutert. Die Zeichnung zeigt in
- Figur 1: ein erstes Ausführungsbeispiel einer Fahrzeugkarosserie mit einem versteiften Vorderwagen in räumlicher Darstellung, wobei lediglich der Vorderwagen dargestellt ist,
- Figur 2: eine Seitenansicht des Vorderwagens von Figur 1,
- Figur 3: eine Ansicht von unten auf den Vorderwagen von Figur 1,
- Figur 4: eine Ansicht von vorne auf den Vorderwagen von Figur 1,
- Figur 5: ein zweites Ausführungsbeispiel einer Fahrzeugkarosserie mit einem versteiften Vorderwagen in räumlicher Darstellung entsprechend Figur 1, die sich durch die Anordnung eines Querträgers von dem ersten Ausführungsbeispiel unterscheidet,
- Figur 6: eine Seitenansicht des Vorderwagens von Figur 5,
- Figur 7: eine Ansicht von unten auf den Vorderwagen von Figur 5,
- Figur 8: eine Ansicht von vorne auf den Vorderwagen von Figur 5,

- Figur 9: ein drittes Ausführungsbeispiel, das in bezug auf die Anordnung eines Querträgers entsprechend dem ersten Ausführungsbeispiel in Figur 1 ausgebildet ist, sich jedoch durch eine rahmenartige Verstrebungsanordnung von diesem unterscheidet, und in
- Figur 10: ein viertes Ausführungsbeispiel, das in bezug auf die Anordnung eines Querträgers entsprechend dem zweiten Ausführungsbeispiel in Figur 5 ausgebildet ist, sich jedoch durch eine rahmenartige Verstrebungsanordnung von diesem unterscheidet.

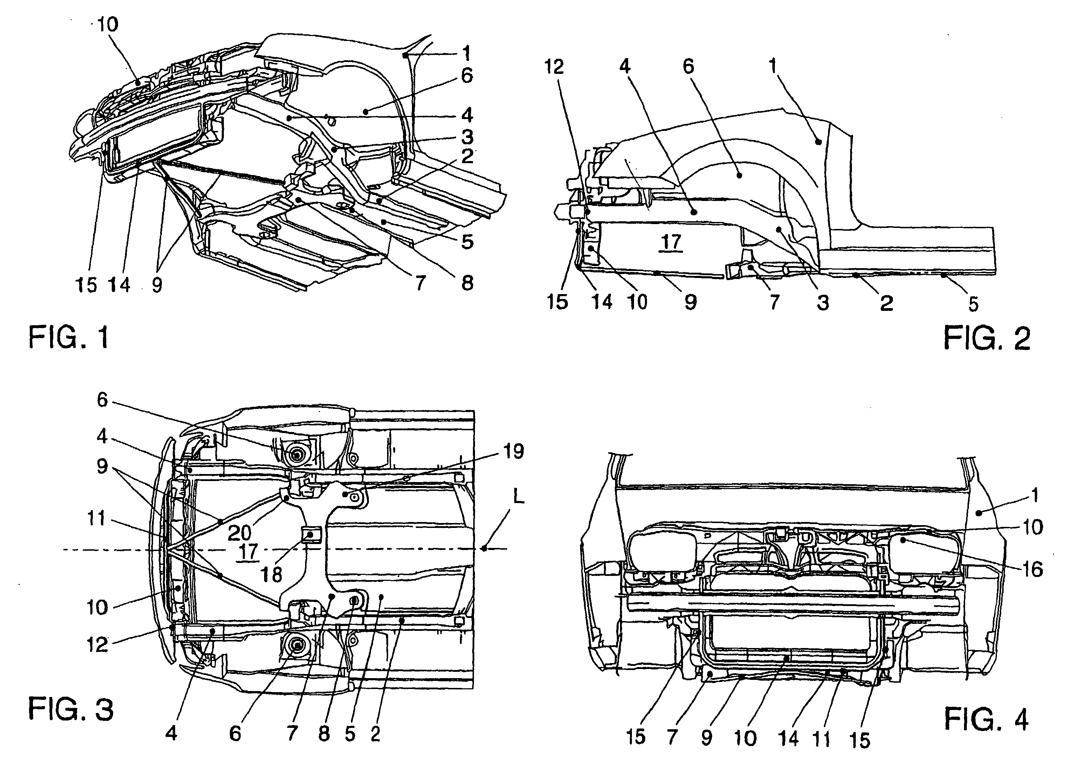

Das erste Ausführungsbeispiel zeigt eine Fahrzeugkarosserie mit einem versteiften Vorderwagen. Die Fahrzeugkarosserie umfaßt einen selbsttragenden Hauptrahmen 1, der unter anderem zwei sich in Fahrzeuglängsrichtung erstreckende, etwa parallele Längsträger mit jeweils einem kastenartigen Querschnittsprofil aufweist. Jeder der Längsträger verläuft mit einem sich im wesentlichen horizontal erstreckenden Abschnitt 2 unter dem Fahrzeugunterboden 5. An den sich im wesentlichen horizontal erstreckenden Abschnitt 2 schließt sich im Bereich von Karosserieausnehmungen 6 für die Fahrzeugräder ein in Richtung auf das Frontende nach oben geneigter Übergangsabschnitt 3 an, der gegebenenfalls auch zur Fahrzeugmitte hin eingezogen sein kann. Letzteres ist insbesondere dann der Fall, wenn die sich im wesentlichen horizontal erstreckenden Abschnitt 2 jeweils zwischen den Fahrzeugrädem einer Fahrzeugseite angeordnet sind. Der geneigte Übergangsabschnitt 3 verläuft, wie insbesondere aus Figur 2 zu erkennen ist, oberhalb der Drehachsen der Fahrzeugräder und geht anschließend wieder in einen sich im wesentlichen horizontal zu dem Frontende des Fahrzeuges erstreckenden Längsabschnitt 4 über. In dem dargestellten Ausführungsbeispiel verlaufen die Längsabschnitte 4 seitlich eines Motorraums 17 und dienen unter anderem der Abstützung eines Motors sowie weiterer, in dem Motorraum 17 angeordneter Aggregate.

An den freien Enden der Längsträger, d. h. an frontseitigen Endabschnitten 12 der seitlich des Motorraums 17 angeordneten Längsabschnitte 4, ist ein Frontendrahmen 10 befestigt, der sich im wesentlichen in einer Vertikalebene quer zur Fahrzeuglängsrichtung L erstreckt. Der Frontendrahmen 10 dient unter anderem der Aufnahme der frontseitigen Beleuchtungseinrichtungen des Fahrzeuges sowie eines Kühlers und weist hierzu entsprechende Ausnehmungen 16 auf. Gegebenenfalls wird eine Stoßstange an dem Frontendrahmen 10 befestigt. Zur Erleichterung der Fertigung ist der Frontendrahmen 10 als Modul ausgebildet, das als Einheit an den freien Enden der Längsträger befestigt wird.

An dem Hauptrahmen 1 der Fahrzeugkarosserie ist bodenseitig weiterhin ein Hilfsrahmen 7 angebracht, an dem in dem dargestellten Ausführungsbeispiel unter anderem die Radträger der Vorderräder des Fahrzeuges abgestützt werden. Der Hilfsrahmen 7 ist dazu unterhalb der Radachsen der Vorderräder angeordnet. Aus Figur 2 ist zu erkennen, daß der Hilfsrahmen 7 den Unterboden 5 des Fahrzeuges zu dessen Frontende hin im wesentlichen horizontal fortsetzt. Der Hilfsrahmen 7 weist, wie insbesondere aus Figur 3 zu erkennen ist, eine in etwa H-förmige Gestalt mit einem sich in Fahrzeugquerrichtung zwischen den Vorderrädern erstreckenden Mittelträger 18 auf, an den sich in Radnähe rückseitig zwei Befestigungsvorsprünge 19 anschließen. Über die Befestigungsvorsprünge 19 ist der Hilfsrahmen 7 an zwei im wesentlichen horizontal verlaufenden Bodenblechabschnitten 13 des Fahrzeugunterbodens 5 angebracht, beispielsweise über Bolzen 8 angeschraubt, wobei die Befestigungspunkte der Befestigungsvorsprünge 19 an dem Fahrzeugunterboden 5 zwischen den sich horizontal erstreckenden Abschnitten 2 der Längsträger angeordnet sind.

An den Mittelträger 18 des Hilfsrahmens 7 ist jeweils in Radnähe ein zu dem Frontende weisender Vorsprung 20 vorgesehen. Zwischen dem Hilfsrahmen 7 und Frontendrahmen 10 ist eine Verstrebungsanordnung in Form von zwei im wesentlichen horizontal verlaufenden Streben 9 angeordnet, die sich in dem dargestellten Ausführungsbeispiel unterhalb des Motorraums 17 erstrecken. Die Streben 9 sind jeweils mit einem Ende an einem der in Fahrzeugquerrichtung voneinander beabstandeten Vorsprünge 20 befestigt, während das andere Ende an einem Querträger 11 am Frontende des Fahrzeuges befestigt ist. Dabei laufen die Streben 9 zu dem Frontende hin V-förmig aufeinander zu, wobei diese beispielsweise einen Winkel von 45 Grad zu der Fahrzeuglängsmittelachse L einnehmen.

Der Querträger 11 ist in dem ersten Ausführungsbeispiel als Rohrbügel ausgebildet und vor dem Frontendrahmen 10 angeordnet. Über den Querträger 11 werden die Endabschnitte 12 der Längsträger miteinander verbunden. Zur Ermöglichung einer im wesentlichen horizontalen Erstreckung der Versteifungsstreben 9 weist der Querträger 11 einen zum Boden unter dem Fahrzeug hin auskragenden und sich in Fahrzeugquerrichtung erstreckenden Verbindungsabschnitt 14 auf, in dessen Mitte die Versteifungsstreben 9 vorzugsweise in einem gemeinsamen Punkt auf der Fahrzeuglängsmittelachse L angelenkt sind. Der Verbindungsabschnitt 14 geht an seinen axialen Enden in sich im wesentlichen vertikal erstreckende Abschnitte 15 über, die zu den Endabschnitten 12 der Längsträger leiten.

Durch die im Motorraumbereich angeordneten Abschnitte 3, 4, 12 der Längsträger, den Hilfsrahmen 7, die Versteifungsstreben 9 sowie den einstückig ausgebildeten Querträger 11 wird eine den Motorraum 17 im Bodenbereich käfigartig umgebende Rahmenkonstruktion mit hoher Steifigkeit gebildet, die insbesondere das Auftreten von Torsions- und Biegeschwingungen an der Karosserie verringert.

Bei dem in den Figuren 1 bis 4 dargestellten, ersten Ausführungsbeispiel ist der Querträger 11 als separates Bauteil ausgebildet, das an dem Frontendrahmen 10 befestigt ist, so daß der Querträger 11 zusammen mit dem Frontendrahmen 10 an den Endabschnitten 12 der Längsträger montiert werden kann.

In einer alternativen Ausführungsvariante, die in den Figuren nicht dargestellt ist, kann der Querträger 11 auch gänzlich in den Frontendrahmen 10 integriert, d. h. einstückig mit diesem ausgebildet werden, wozu der Frontendrahmen 10 an den entsprechenden Stellen des Querträgers 11 verstärkt wird.

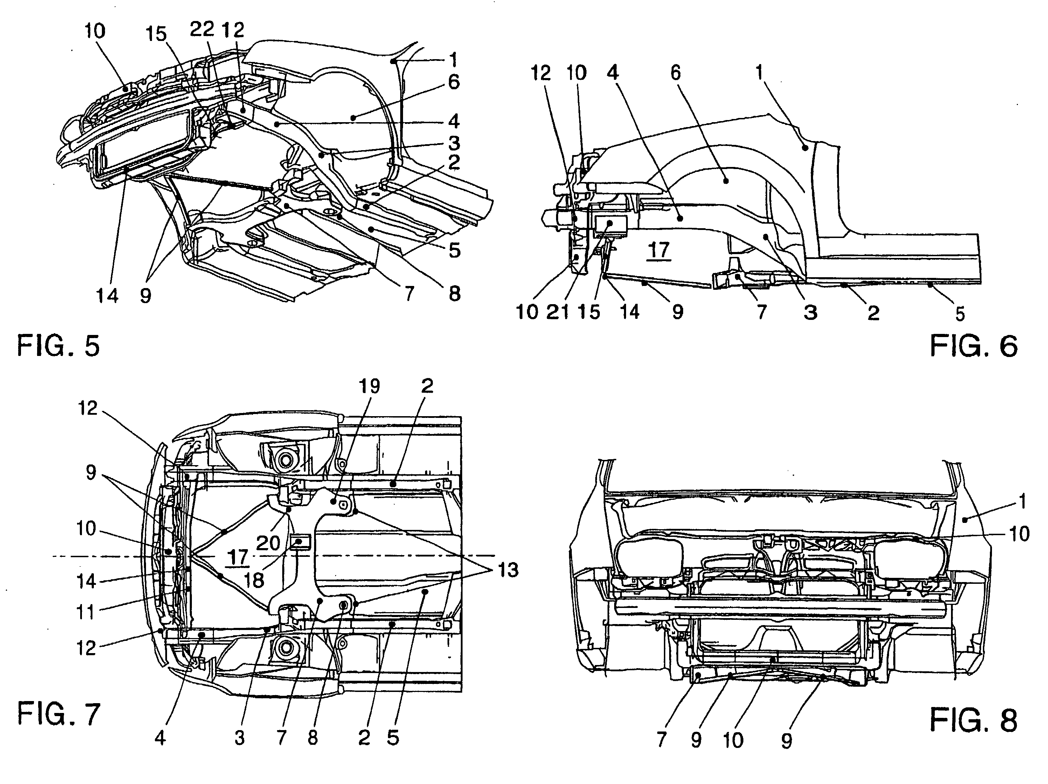

Ein weiteres Ausführungsbeispiel ist in den Figuren 5 bis 8 dargestellt. Der Hauptrahmen 1 sowie der Hilfsrahmen 7 sind hierbei wie in dem ersten Ausführungsbeispiel nach den Figuren 1 bis 4 ausgebildet. Weiterhin ist wiederum ein Frontendrahmen 10 vorgesehen, der an die Endabschnitte 12 der Längsträger angeschlossen ist. Im Unterschied zu dem ersten Ausführungsbeispiel ist hier nun der rohrartige Querträger 11 nicht direkt an dem Frontendrahmen 10 angebracht, sondern unmittelbar neben diesem auf der zu dem Fahrzeug hin liegenden Seite angeordnet. Jedoch verbindet auch hier der Querträger 11 die seitlich des Motorraums 17 angeordneten Längsträger an ihren Endabschnitten 12 und ist über V-förmig angeordnete Versteifungsstreben 9 mit an dem Hilfsrahmen 7 vorgesehenen Vorsprüngen 20 verbunden.

Wie in dem ersten Ausführungsbeispiel ist zur Gewährleistung einer im wesentlichen horizontalen Erstreckung der Versteifungsstreben 9 der Querträger 11 mit einem bodenseitig auskragenden und sich in Fahrzeugquerrichtung horizontal erstreckenden Verbindungsabschnitt 14 versehen, in dessen Mitte die Versteifungsstreben 9 angelenkt sind. Der Verbindungsabschnitt 14 geht an seinen axialen Enden in sich nach oben erstreckende, geneigte Abschnitte 15 über, die zu den Endabschnitten 12 der Längsträger führen. Die geneigten Abschnitte 15 laufen dann in sich etwa horizontal erstreckenden Enden 22 aus, die jeweils an einem Tragjoch 21 angekoppelt sind, das jeweils an einem Endabschnitt 12 eines der Längsträger befestigt, beispielsweise angeschweißt ist.

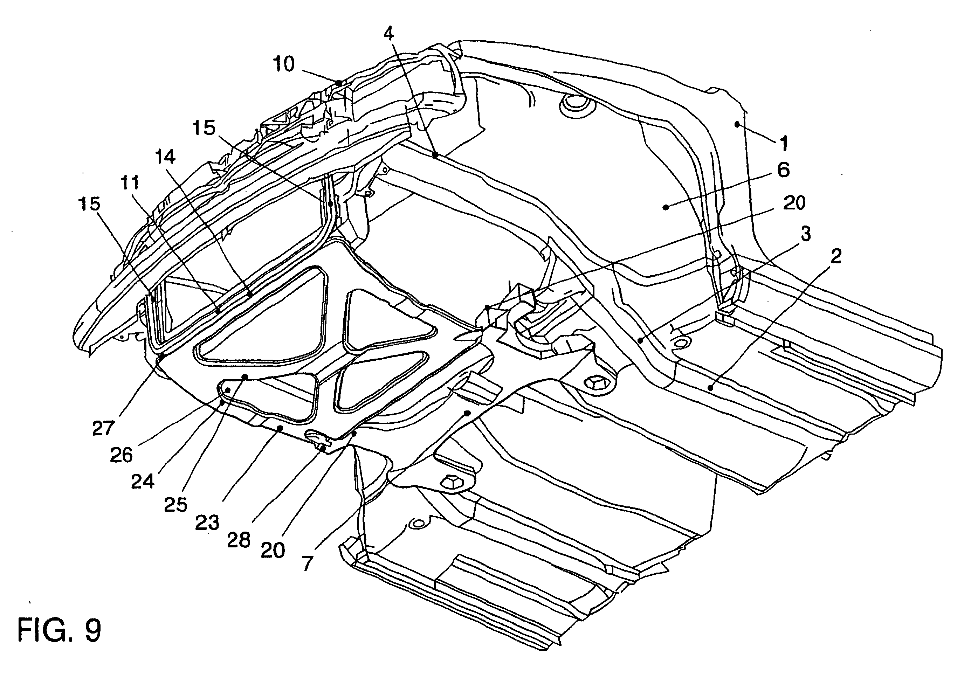

Ein drittes Ausführungsbeispiel ist in Figur 9 dargestellt. Dieses unterscheidet sich von dem ersten Ausführungsbeispiel nach den Figuren 1 bis 4 lediglich durch die Ausgestaltung der Verstrebungsanordnung, so daß an dieser Stelle nur noch auf die Unterschiede zu dem ersten Ausführungsbeispiel eingegangen wird. Die Verstrebungsanordnung in Figur 9 ist als flacher Schubrahmen 23 mit im wesentlichen rechteckiger Grundform ausgebildet. Der Schubrahmen 23 umfaßt einen breiten Außenrahmen 24, der durch zwei sich etwa in der Mitte kreuzende Diagonalstreben 25 verstärkt wird, welche die jeweils einander gegenüberliegenden Ecken des Außenrahmens 24 miteinander verbinden. In dem dargestellten Ausführungsbeispiel ist der Schubrahmen 23 als im wesentlichen flaches Blechelement ausgebildet, dessen Strebenstruktur durch Ausstanzen etwa dreieckartiger Ausnehmungen 26 erhalten wird, wobei hier vier Ausnehmungen 26 kleeblattartig angeordnet sind. Der Schubrahmen 23 erstreckt sich dabei im wesentlichen horizontal unter einem Motorraum 17 hindurch. In einer alternativen Ausführungsvariante kann der Schubrahmen auch als geschlossenes Blech ausgebildet werden, um den Motorraum nach unten abzukapseln.

Wie aus Figur 9 weiter zu erkennen ist, erfolgt die Ankopplung des Schubrahmens 23 an den Hilfsrahmen 7 an zwei in Fahrzeugquerrichtung voneinander beabstandeten Punkten 28, die an den Vorsprüngen 20 des Hilfsrahmens 7 angeordnet sind. Die frontseitigen Anbindung des Schubrahmens 23 erfolgt über einen sich in Fahrzeugquerrichtung erstreckenden Querriegel 27 des Außenrahmen 24 an den Verbindungsabschnitt 14 des Querträgers 11. Die Befestigung wird dabei bevorzugt entlang der gesamten Länge des Querriegels 27 an dem Verbindungsabschnitt 14 vorgenommen, wodurch sich eine besonders hohe Steifigkeit des Bodenbereiches des Vorderwagens erzielen läßt.

Bei dem in Figur 9 dargestellten dritten Ausführungsbeispiel ist wie in dem ersten Ausführungsbeispiel der Querträger 11 frontseitig vor einem Frontendrahmen bzw.-modul 10 angeordnet.

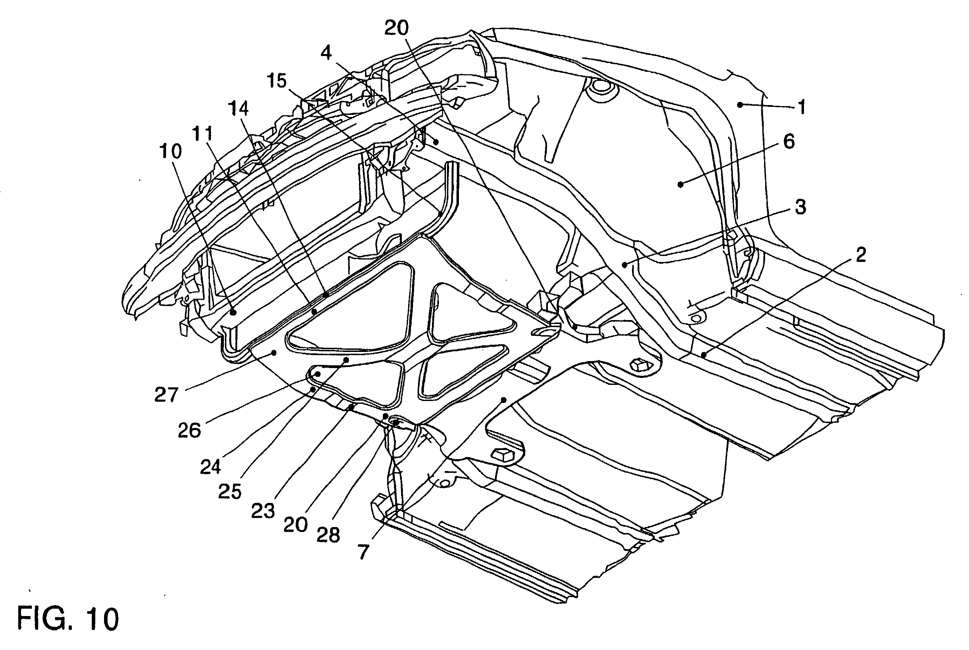

Ein viertes Ausführungsbeispiel ist in Figur 10 gezeigt, das sich von dem zweiten Ausführungsbeispiel nach den Figuren 5 bis 8 nur durch die Ausgestaltung der Verstrebungsanordnung unterscheidet. Diese ist bei dem vierten Ausführungsbeispiel wiederum als Schubrahmen 23 ausgebildet, der bereits im Zusammenhang mit Figur 9 oben erläutert wurde. Im Unterschied zu dem dritten Ausführungsbeispiel nach Figur 9 ist in Figur 10 der Querträger 11 unmittelbar hinter dem Frontendrahmen bzw. -modul 10 in einem Frontendbereich der Karosserie angeordnet.

Die Erfindung wurde vorstehend anhand von vier Ausführungsbeispielen erläutert, bei denen die Versteifung an einem Vorderwagen vorgenommen ist. Es ist jedoch ohne weiteres möglich, eine gleichartige Versteifung auch an einem Fahrzeugheck vorzunehmen, unabhängig davon, ob dort, wie in der EP 0 603 536 B1 offenbart, der Fahrzeugmotor, oder aber beispielsweise ein Gepäckaufbewahrungsabteil untergebracht ist, da der Versteifungseffekt der Karosserie hiervon unabhängig ist.

### BEZUGSZEICHENLISTE

- 1: Hauptrahmen
- 2: horizontaler Abschnitt des Längsträgers unter dem Unterboden
- 3: Übergangsabschnitt des Längsträgers
- 4: horizontaler Abschnitt des Längsträgers im Motorraum
- 5: Unterboden
- 6: Radausnehmung
- 7: Hilfsrahmen
- 8: Bolzen
- 9: Strebe
- 10: Frontendrahmen
- 11: Querträger
- 12: Endabschnitt des Längsträgers
- 13: Unterbodenabschnitt
- 14: Verbindungsabschnitt des Querträgers
- 15: sich im wesentlichen vertikal erstreckender Abschnitt des Querträgers
- 16: Ausnehmung
- 17: Motorraum
- 18: Mittelträger des Hilfsrahmens
- 19: Befestigungsabschnitt des Hilfsrahmens
- 20: Vorsprung des Hilfsrahmens
- 21: Tragjoch
- 22: horizontaler Endabschnitt des Querträgers
- 23: Schubrahmen
- 24: Außenrahmen
- 25: Diagonalstrebe
- 26: dreieckartige Ausnehmung
- 27: Querriegel
- 28: Befestigungspunkt

## Patentansprüche

1. Fahrzeugkarosserie mit einer bodenseitigen Verstrebungsanordnung, umfassend einen Hauptrahmen (1) mit zwei zu einem Ende des Fahrzeugs verlaufenden Längsträgern (2, 3, 4), die gegenüber einem Fahrzeugunterboden (5) nach oben abgesetzt sind, einen an dem Hauptrahmen (1) befestigten, den Unterboden (5) des Hauptrahmens (1) in Richtung des Endes des Fahrzeuges fortsetzenden Hilfsrahmen (7), einen im Fahrzeugendbereich an den Längsträgern befestigten Querträger (11), sowie eine den Hilfsrahmen (7) in Richtung des Fahrzeugendes im wesentlichen horizontal fortsetzende Verstrebungsanordnung (9, 23), die mit einem Ende an in Fahrzeugquerrichtung voneinander beabstandeten Punkten an dem Hilfsrahmen (7) befestigt ist, **dadurch gekennzeichnet, daß** der Querträger (11) einen zur Bodenseite nach unten auskragenden, sich im wesentlichen horizontal in Fahrzeugquerrichtung erstreckenden und im wesentlichen auf der Höhe des Hilfsrahmens (7) angeordneten Verbindungsabschnitt (14) aufweist, welcher an seinen axialen Enden jeweils in einen im wesentlichen vertikal oder nach oben geneigt verlaufenden Abschnitt (15) übergeht und zu einem Endabschnitt (12) eines der Längsträger (4) leitet und daß die Verstrebungsanordnung (11) mit dem anderen Ende an dem Verbindungsabschnitt (14) des Querträgers (11) befestigt ist.

2. Fahrzeugkarosserie nach Anspruch 1, **dadurch gekennzeichnet, daß** der Querträger (11) einstückig ausgebildet ist.

3. Fahrzeugkarosserie nach Anspruch 1 oder 2, **dadurch gekennzeichnet, daß** die Verstrebungsanordnung durch zwei Streben (9) gebildet wird, die zu dem Fahrzeugende hin V-förmig aufeinanderzulaufen.

4. Fahrzeugkarosserie nach Anspruch 3, **dadurch gekennzeichnet, daß** die Streben (9) in einem gemeinsamen Punkt an dem Querträger (11) angelenkt sind.

5. Fahrzeugkarosserie nach Anspruch 1 oder 2, **dadurch gekennzeichnet, daß** die Verstrebungsanordnung durch einen flachen Schubrahmen (23) gebildet wird, der an dem Querträger (11) entlang des sich in Fahrzeugquerrichtung erstreckenden Verbindungsabschnittes (14) befestigt ist.

6. Fahrzeugkarosserie nach einem der Ansprüche 1, 2 oder 5, **dadurch gekennzeichnet, daß** die Verstrebungsanordnung als im wesentlichen rechteckiger Außenrahmen (24) mit Diagonalstreben (25) ausgebildet ist.

7. Fahrzeugkarosserie nach einem der Ansprüche 1, 2, 5 oder 6, **dadurch gekennzeichnet, daß** die Verstrebungsanordnung als einstückiges Blechelement mit vier kleeblattartig angeordneten Dreiecksausnehmungen (27) ausgebildet ist.

8. Fahrzeugkarosserie nach einem der Ansprüche 1 bis 7, **dadurch gekennzeichnet, daß** an dem Hilfsrahmen (7) Radträger für die Räder einer Fahrzeugachse abgestützt sind, wobei der Hilfsrahmen (7) unterhalb der Radachsen liegt, die Längsträger (3) sich hingegen über die Radachsen erstrecken.

9. Fahrzeugkarosserie nach einem der Ansprüche 1 bis 8, **dadurch gekennzeichnet, daß** der Hilfsrahmen (7) an einem Bodenblechabschnitt (13) des Fahrzeugunterbodens (5) zwischen den Längsträgem (2) befestigt ist.

10. Fahrzeugkarosserie nach einem der Ansprüche 1 bis 9, **dadurch gekennzeichnet, daß** an den freien Endabschnitten (12) der Längsträger (4) ein Endrahmen (10) befestigt ist, der sich im wesentlichen vertikal ausgerichtet in einer Ebene quer zu der Fahrzeuglängsrichtung (L) erstreckt.

11. Fahrzeugkarosserie nach Anspruch 10, **dadurch gekennzeichnet, daß** der Querträger (11) in Fahrzeuglängsrichtung (L) unmittelbar neben dem Endrahmen (10) zu dem Fahrzeug hin angeordnet ist.

12. Fahrzeugkarosserie nach Anspruch 10, **dadurch gekennzeichnet, daß** der Querträger (11) an dem Endrahmen (10) befestigt ist.

13. Fahrzeugkarosserie nach Anspruch 10, **dadurch gekennzeichnet, daß** der Querträger (11) in den Endrahmen (10) integriert und einstückig mit diesem ausgebildet ist.

14. Fahrzeugkarosserie nach einem der Ansprüche 1 bis 13, **dadurch gekennzeichnet, daß** der Verbindungsabschnitt (14) des Querträgers (11) stabartig ausgebildet ist und sich im wesentlichen horizontal in Fahrzeugquerrichtung erstreckt, wobei der Verbindungsabschnitt (14) auf der Höhe des Hilfsrahmens (7) angeordnet ist und an seinen axialen Enden jeweils in einen im wesentlichen vertikal oder nach oben geneigt verlaufenden Abschnitt (15) übergeht, der zu einem Endabschnitt (12) eines der Längsträger (4) leitet.

## Claims

1. Vehicle body having a strutting arrangement in the vicinity of the floor, comprising a main frame (1) having two longitudinal members (2, 3, 4) which run to one end of the vehicle and are offset upwards with respect to a vehicle underbody (5), an auxiliary frame (7) which is fastened to the main frame (1) and continues the underbody (5) of the main frame (1) in the direction of the end of the vehicle, a crossmember (11) which is fastened to the longitudinal members in the end region of the vehicle and a strutting arrangement (9, 23) which essentially horizontally continues the auxiliary frame (7) in the direction of the vehicle end and is fastened by one end to the auxiliary frame (7), at points which are spaced apart from one another in the transverse direction of the vehicle, **characterized in that** the crossmember (11) and **in that** the strutting arrangement (9, 23) has a connecting section (14) which projects downwards to the ground side, extends essentially horizontally in the transverse direction of the vehicle and is arranged essentially level with the auxiliary frame (7) and which merges at its axial end in each case into a section (15), which is inclined essentially vertically or upward, and leads to an end section (12) of one of the longitudinal members (4), is fastened by the other end to the connecting section (14) of the crossmember (11).

2. Vehicle body according to Claim 1, **characterized in that** the crossmember (11) is of integral design.

3. Vehicle body according to Claim 1 or 2, **characterized in that** the strutting arrangement is formed by two struts (9) which converge together in a V-shaped manner towards the vehicle end.

4. Vehicle body according to Claim 3, **characterized in that** the struts (9) are articulated in a common point on the crossmember (11).

5. Vehicle body according to Claim 1 or 2, **characterized in that** the strutting arrangement is formed by a flat thrust frame (23) which is fastened to the crossmember (11) along the connecting section (14) extending in the transverse direction of the vehicle.

6. The vehicle body according to one of Claims 1, 2 or 5, **characterized in that** the strutting arrangement is designed as an essentially rectangular outer frame (24) having diagonal struts (25).

7. Vehicle body according to one of Claims 1, 2, 5 or 6, **characterized in that** the strutting arrangement is designed as an integral sheet-metal element having four triangular recesses (27) arranged in the manner of a clover leaf.

8. Vehicle body according to one of Claims 1 to 7, **characterized in that** wheel supports for the wheels of a vehicle axle are supported on the auxiliary frame (7), the auxiliary frame (7) being situated below the wheel axles whereas the longitudinal members (3) extend over the wheel axles.

9. Vehicle body according to one of Claims 1 to 8, **characterized in that** the auxiliary frame (7) is fastened between the longitudinal members (2) to a floor panel section (13) of the vehicle underbody (5).

10. Vehicle body according to one of Claims 1 to 9, **characterized in that** an end frame (10) is fastened to the free end sections (12) of the longitudinal members (4), said end frame extending in an essentially vertical orientation in a plane transverse to the longitudinal direction (L) of the vehicle.

11. Vehicle body according to Claim 10, **characterized in that** the crossmember (11) is arranged directly next to the end frame (10) towards the vehicle in the longitudinal direction (L) of the vehicle.

12. Vehicle body according to Claim 10, **characterized in that** the crossmember (11) is fastened to the end frame (10).

13. Vehicle body according to Claim 10, **characterized in that** the crossmember (11) is integrated in the end frame (10) and is of integral design with the latter.

14. Vehicle body according to one of Claims 1 to 13, **characterized in that** the connecting section (14) of the crossmember (11) is of bar-like design and extends essentially horizontally in the transverse direction of the vehicle, the connecting section (14) being arranged level with the auxiliary frame (7) and merging at its axial ends in each case into a section (15) which is inclined essentially vertically or upwards and leads to an end section (12) of one of the longitudinal members (4).

## Revendications

1. Carrosserie automobile comprenant un dispositif d'entretoise du côté inférieur, comprenant un cadre principal (1) avec deux supports longitudinaux (2, 3, 4) s'étendant vers une extrémité du véhicule, lesquels sont décalés vers le haut par rapport à un dessous de caisse de véhicule (5), un cadre auxiliaire (7) fixé sur le cadre principal (1), prolongeant le dessous de caisse (5) du cadre principal (1) dans la direction de l'extrémité du véhicule, un support transversal (11) fixé dans la région de l'extrémité du véhicule aux supports longitudinaux, ainsi qu'un dispositif d'entretoise (9, 23) prolongeant le cadre auxiliaire (7) essentiellement horizontalement dans la direction de l'extrémité du véhicule, lequel est fixé à une extrémité au cadre auxiliaire (7) en des points espacés les uns des autres dans la direction transversale du véhicule, **caractérisée en ce que** le support transversal (11) présente une portion de liaison (14) en saillie vers le bas par rapport au côté inférieur, s'étendant essentiellement horizontalement dans la direction transversale du véhicule et disposée essentiellement à la hauteur du cadre auxiliaire (7), laquelle se prolonge au niveau de ses extrémités axiales à chaque fois par une portion (15) s'étendant essentiellement verticalement ou inclinée vers le haut et conduit à une portion d'extrémité (12) d'un des supports longitudinaux (4) et **en ce que** le dispositif d'entretoise (11) est fixé à l'autre extrémité à la portion de liaison (14) du support transversal (11).

2. Carrosserie automobile selon la revendication 1, **caractérisée en ce que** le support transversal (11) est réalisé d'une seule pièce.

3. Carrosserie automobile selon la revendication 1 ou 2, **caractérisée en ce que** le dispositif d'entretoise est formé par deux entretoises (9) qui s'étendent l'une vers l'autre en forme de V dans la direction de l'extrémité du véhicule.

4. Carrosserie automobile selon la revendication 3, **caractérisée en ce que** les entretoises (9) sont articulées au support transversal (11) en un point commun.

5. Carrosserie automobile selon la revendication 1 ou 2, **caractérisée en ce que** le dispositif d'entretoise est formé par un cadre de poussée plat (23) qui est fixé sur le support transversal (11) le long de la portion de liaison (14) s'étendant dans la direction transversale du véhicule.

6. Carrosserie automobile selon l'une quelconque des revendications 1, 2 ou 5, **caractérisée en ce que** le dispositif d'entretoise est réalisé sous la forme d'un cadre extérieur (24) essentiellement rectangulaire avec des entretoises en diagonale (25).

7. Carrosserie automobile selon l'une quelconque des revendications 1, 2, 5 ou 6, **caractérisée en ce que** le dispositif d'entretoise est réalisé sous la forme d'un élément en tôle d'une seule pièce avec quatre évidements triangulaires (27) disposés en feuille de trèfle.

8. Carrosserie automobile selon l'une quelconque des revendications 1 à 7, **caractérisée en ce que** des supports de roue pour les roues d'un essieu du véhicule sont supportés sur le cadre auxiliaire (7), le cadre auxiliaire (7) se trouvant en dessous des essieux des roues, les supports longitudinaux (3) s'étendant par contre au-dessus des essieux des roues.

9. Carrosserie automobile selon l'une quelconque des revendications 1 à 8, **caractérisée en ce que** le cadre auxiliaire (7) est fixé sur une portion de tôle inférieure (13) du dessous de caisse du véhicule (5) entre les supports longitudinaux (2).

10. Carrosserie automobile selon l'une quelconque des revendications 1 à 9, **caractérisée en ce qu'**un cadre d'extrémité (10) est fixé aux portions d'extrémité libres (12) des supports longitudinaux (4), lequel est orienté essentiellement verticalement et s'étend dans un plan transversal à la direction longitudinale du véhicule (L).

11. Carrosserie automobile selon la revendication 10, **caractérisée en ce que** le support transversal (11) est disposé dans la direction longitudinale du véhicule (L) directement à côté du cadre d'extrémité (10) en direction du véhicule.

12. Carrosserie automobile selon la revendication 10, **caractérisée en ce que** le support transversal (11) est fixé au cadre d'extrémité (10).

13. Carrosserie automobile selon la revendication 10, **caractérisée en ce que** le support transversal (11) est intégré dans le cadre d'extrémité (10) et est réalisé d'une pièce avec celui-ci.

14. Carrosserie automobile selon l'une quelconque des revendications 1 à 13, **caractérisée en ce que** la portion de liaison (14) du support transversal (11) est réalisée en forme de barre et s'étend essentiellement horizontalement dans la direction transversale du véhicule, la portion de liaison (14) étant disposée à la hauteur du cadre auxiliaire (7) et se prolongeant au niveau de ses extrémités axiales à chaque fois par une portion (15) s'étendant essentiellement verticalement ou inclinée vers le haut, qui conduit à une portion d'extrémité (12) de l'un des supports longitudinaux (4).
